# EUROPÄISCHE PATENTSCHRIFT

(11) **EP 3 548 412 B1**
(45) Veröffentlichungstag und Bekanntmachung des Hinweises auf die Patenterteilung: **07.10.2020**
(21) Anmeldenummer: 17804907.8
(22) Anmeldetag: 29.11.2017
(51) Int. Cl.: B66B 11/02, E04F 13/08

(54) **VERBINDUNGSEINRICHTUNG UND VERFAHREN ZUM VERBINDEN EINES WANDELEMENTS IN EINER AUFZUGSKABINE**
CONNECTING DEVICE AND METHOD FOR CONNECTING A WALL ELEMENT IN AN ELEVATOR CAR
DISPOSITIF DE FIXATION ET PROCÉDÉ PERMETTANT DE FIXER UN ÉLÉMENT DE PAROI DANS UNE CABINE D'ASCENSEUR

(30) Priorität: 29.11.2016 EP 16201274
(43) Veröffentlichungstag der Anmeldung: 09.10.2019
(73) Patentinhaber: Inventio AG, 6052 Hergiswil (CH)
(72) Erfinder: STEINER, Adrian, 6034 Inwil (CH); D'APICE, Alessandro, 6030 Ebikon (CH); NOTTER, Oliver, 6048 Horw (CH); OTTIGER, Simon, 6372 Ennetmoos (CH)
(86) Internationale Anmeldenummer: PCT/EP2017/080752
(87) Internationale Veröffentlichungsnummer: WO 2018/099939

(56) Entgegenhaltungen:
- FR-A1- 2 721 074
- US-A1- 2009 272 055

## Beschreibung

Die vorliegende Erfindung betrifft eine Verbindungseinrichtung zur Verbindung von einem Wandelement mit einer Rohdecke einer Aufzugskabine, ein Wandelement, eine Wandelementanordnung mit derartigen Verbindungseinrichtungen und Wandelementen, eine Aufzugskabine mit derartigen Verbindungseinrichtungen und/oder Wandelementen sowie ein Verfahren zum Verbinden von solchen Wandelementen mit dem Rohbau einer Aufzugskabine. Die Wandelemente bilden die für den Passagier von innen sichtbare Wandverkleidung der Aufzugskabine.

Es ist bekannt, den Rohbau von Aufzugskabinen, wobei der Rohbau eine Grundstruktur zum Bilden eines in der Regel quaderförmigen Kabinenkörpers vorgibt, mit Wandelementen zur Innenverkleidung und zu Dekorationszwecken zu versehen. Dieser Rohbau der Aufzugskabine, umfassend die Rohdecke, den Rohboden und gegebenenfalls die Rohwände, ist typischerweise in einer Rahmenkonstruktion, beispielweise aus Stahl oder aus einem Leichtmetall, gefertigt. Im Grenzfall weist der Rohbau der Kabine keine flächigen Elemente auf und die Rohdecke besteht nur aus einem Rahmen.

Die Öffnungen der Rahmenkonstruktion und die Rahmenkonstruktion werden mit flächigen Wand- bzw. Deckenelementen abgedeckt. Die Wand- und Deckenelemente sorgen üblicherweise für eine ansprechende optische Gestaltung des Innenraums der Aufzugskabine und können gegebenenfalls sogar für die Stabilisierung der Aufzugskabine mitwirken.

Bekannt ist die Wandelemente von der Aussenseite der Rohwände aus zu befestigen, zum Beispiel mit Schrauben.

Bevorzugt sollen die Wandelemente möglichst spät montiert werden, sodass die Wandelemente durch die Schachttür eingeführt werden müssen. Gegebenenfalls sollten sie auch wieder aus dem Aufzugschacht entfernt werden. Dafür ist es vorteilhaft, wenn die Wandelemente von der Innenseite des im Aufzugsschacht befindlichen Rohbaus montierbar und gegebenenfalls demontiertbar sind. Die Wandelemente können beispielsweise auf die Rohwände, insbesondere auf die Rahmenkonstruktion, aufgeklebt werden. Es ist weiter auch bekannt, eine Rohwand, welche mit einem Wandelement bedeckt werden soll, mit entsprechenden Befestigungsmitteln auszustatten, zum Beispiel mit einer Verankerung, wie sie in FR1650638 offenbart ist, mit Clips zum Einhängen eines Wandelements, wie sie in US4394809 gezeigt sind, oder mit einer Halterung, wie sie ES2394510 zeigt. Die Rohwand kann auch Ausnehmungen zum Einhängen von Clips aufweisen, die an einem Wandelement vorgesehen sind, wie dies zum Beispiel in GB2139183 offenbart ist. Für die Montage muss dabei stets ein auf dem Wandelement vorgesehenes Gegenstück in Wirkverbindung mit dem auf der Rohwand angebrachten Befestigungsmittel oder mit der in der Rohwand vorgesehenen Ausnehmung gebracht werden. Das Gegenstück befindet sich auf der zur Rohwand weisenden Seite des Wandelements und ist daher typischerweise für den Monteur nicht sichtbar, was die Montage erschweren kann.

US 2009/272055 A1 offenbart eine Aufzugskabine mit einer Rohdecke, mindestens einem Wandelement und mit mindestens einer Verbindungseinrichtung zur Verbindung von dem Wandelement mit der Rohdecke, wobei die Verbindungseinrichtung mindestens ein Schienenelement mit zwei Schenkeln umfasst, von denen ein erster Schenkel im montierten Zustand an der Rohdecke anliegt und ein zweiter Schenkel mindestens eine Montagefläche für mindestens ein Wandelement aufweist, wobei die Montagefläche mindestens eine erste Ausnehmung zum Einhängen des Wandelements umfasst, oder das Wandelement an seiner im montierten Zustand nach oben weisenden Kante mindestens eine erste Ausnehmung umfasst.

Es offenbart auch ein Verfahren zum Verbinden von mindestens einem Wandelement mit einem Rohbau einer Aufzugskabine umfassend die Schritte:
- Anbringen mindestens einer Verbindungseinrichtung an die Rohdecke einer Aufzugskabine, wobei die Verbindungseinrichtung mindestens ein Schienenelement mit zwei Schenkeln umfasst, von denen ein erster Schenkel an die Rohdecke angelegt wird und ein zweiter Schenkel mindestens eine Montagefläche für mindestens ein Wandelement aufweist, wobei die Montagefläche mindestens eine erste Ausnehmung zum Einhängen des Wandelements umfasst
- Befestigen mindestens eines Wandelements, wobei das Wandelement, mindestens eine erste Ausnehmung umfasst

Für die Montage von Wand- und Deckenelementen einer Aufzugskabine können Verbindungswinkel verwendet werden, wie sie beispielweise in der US 2004/0195049 offenbart sind. Die Befestigung erfolgt typischerweise mit Schrauben, die von der Aussenseite der Kabine fixiert werden müssen.

Die FR 2 721 074 offenbart alternative Verbindungselemente. Als Verbindungselemente können Verriegelungseinheiten mit zwei Drehzapfen verwendet werden, die jeweils in Öffnungen abgewinkelter Seitenabschnitte von einem Decken- und einem Wandelement eingeführt werden. Die Verriegelungselemente müssen allerdings auch von der Aussenseite der Kabine verriegelt werden.

Es ist daher die Aufgabe der vorliegenden Erfindung, eine Aufzugskabine sowie ein zum Verbinden ausgeführtes Verfahren vorzustellen, welche die Nachteile des Bekannten vermeiden, und insbesondere eine einfache und schnelle Montage sowie ein einfaches und schnelles Austauschen von Wandelementen ermöglichen.

Die Aufgabe wird gelöst durch eine Aufzugskabine mit einer Rohdecke, mindestens einem Wandelement und einer Verbindungseinrichtung zur Verbindung von dem Wandelement mit der Rohdecke der Aufzugskabine. Die Verbindungseinrichtung umfasst mindestens ein Schienenelement mit zwei Schenkeln, von denen ein erster Schenkel im montierten Zustand an der Rohdecke anliegt und ein zweiter Schenkel mindestens eine Montagefläche für mindestens ein Wandelement aufweist. Die Wandelemente können innenseitig an den Rohwänden angeordnet sein und bilden die für den Passagier von innen sichtbare Wandverkleidung der Aufzugskabine. Die Montagefläche ist im montierten Zustand der Verbindungseinrichtung bevorzugt parallel zu der Rohwand der Aufzugskabine ausgerichtet, die durch das Wandelement abgedeckt werden soll.

Ein Wandelement oder mehrere Wandelemente, die nebeneinander angeordnet sind, können an die Montagefläche angelegt werden.

Der erste Schenkel und der zweite Schenkel schliessen bevorzugt einen Winkel von 90 Grad ein. Im montierten Zustand weist der erste Schenkel insbesondere von der Rohwand weg, die überdeckt werden soll.

Die Verbindungseinrichtung kann somit ohne Messmittel, zum Beispiel eine Wasserwaage, angebracht werden und sorgt trotzdem dafür, dass die Wandelemente nach der Montage wie gewünscht bezüglich des Rohbaus und/oder anderer Wandelemente ausgerichtet sind. Als Orientierung bei der Montage der Verbindungseinrichtung dienen die Rohdecke und die Rohwände.

Eine Verbindungseinrichtung kann pro abzudeckender Rohwand und/oder pro zu montierendem Wandelement ein Schienenelement umfassen oder mehrere Schienenelemente, die nebeneinander in einer Reihe angeordnet werden können.

Eine Verbindungseinrichtung kann auch ein abgewinkeltes Schienenelement umfassen und somit zum Befestigen von Wandelementen für zwei oder mehr Rohwände dienen. Ein solches abgewinkeltes Schienenelement kann beispielsweise ein aus einem Metallblech gebildetes Biegeteil sein, das einfach und kostengünstig herstellbar ist.

Ein Schienenelement kann im Profil T-förmig ausgebildet sein. Bevorzugt ist das Profil jedoch L-förmig ausgebildet, und die Verbindungseinrichtung umfasst nur einen ersten und einen zweiten Schenkel. Die Länge des ersten und/oder zweiten Schenkels ist insbesondere kleiner als die Länge des Schienenelements.

Mit der Verbindungseinrichtung wird eine Schnittstelle für die Befestigung der Wandelemente zur Verfügung gestellt, die frühzeitig an der Rohdecke angebracht werden kann, nicht bei der Montage der Rohwände stört und erlaubt, dass die Wandelemente erst zu einem späten Montagezeitpunkt angebracht werden können, wodurch das Risiko einer Beschädigung der Wandelemente während der Montage verringert wird. Die Verbindungseinrichtung ist ausserdem eine Schnittstelle für die Befestigung der Wandelemente, die unabhängig von der Gestaltung der Wand ist, beispielsweise davon, ob am Wandelement ein Bedienpanel vorgesehen ist. Wandelemente mit oder ohne Funktionselemente können somit auf die gleiche Art montiert werden und/oder Rohwände mit oder ohne Funktionselemente können auf die gleiche Art bedeckt werden.

Erfindungsgemäss umfasst die Montagefläche mindestens eine erste Ausnehmung zum Einhängen eines Wandelements. Die Verbindungseinrichtung kann also dafür sorgen, dass ein Wandelement von der Rohdecke der Aufzugskabine herabhängt.

Das Wandelement weist an seiner im montierten Zustand nach oben weisenden Kante mindestens ein Einhängeelement zum Eingriff in eine erste Ausnehmung der Verbindungseinrichtung auf.

In einer alternativen Variante der Aufzugskabine umfasst das Wandelement an seiner im montierten Zustand nach oben weisenden Kante mindestens eine erste Ausnehmung und die Montagefläche der Verbindungseinrichtung weist mindestens ein Einhängeelement zum Eingriff in die erste Ausnehmung des Wandelements auf. Das Wand-element kann dann auf das Einhängeelement der Verbindungseinrichtung aufgehängt werden.

Vorteilhafterweise umfasst die Montagefläche mindestens eine zweite Ausnehmung zur Aufnahme eines Befestigungselements für eine Verbindung mit dem Wandelement, die bevorzugt unterhalb der ersten Ausnehmung zum Einhängen des Wandelements angeordnet ist.

Die zweite Ausnehmung ist vorzugsweise mit einem Innengewinde versehen, so dass eine Schraube Halt in der Ausnehmung findet.

Bevorzugt kann ein Wandelement also an der Verbindungseinrichtung eingehängt und anschliessend mittels eines Befestigungselements fixiert werden. Als Befestigungselement können eine Schraube, eine Niete, ein Federklappdübel und/oder ein Hohlraumdübel vorgesehen sein.

Der zweite Schenkel der Verbindungseinrichtung kann Laschen umfassen, die als Montageflächen ausgebildet sind. Die Laschen weisen weiter von der Kontaktstelle der Schenkel weg, als der Rest des zweiten Schenkels. Die Laschen bilden damit eine vergrösserte Anlagefläche und bieten Platz für erste und/oder zweite Ausnehmungen. Es können Laschen vorgesehen sein, auf denen nur eine erste oder nur eine zweite Ausnehmung angebracht ist oder zu jeder ersten Ausnehmung können mehrere zweite Ausnehmungen angebracht sein. Bevorzugt ist zu jeder ersten Ausnehmung eine zweite Ausnehmung vorgesehen.

Der erste Schenkel kann fest mit der Rohdecke verbunden werden, zum Beispiel angeklebt oder angeschweisst werden. Vorzugsweise umfasst der erste Schenkel mindestens eine dritte Ausnehmung für eine Aufnahme von einem Befestigungselement zum Verbinden mit der Rohdecke. Der erste Schenkel kann zum Beispiel an der Rohdecke festgenietet oder an die Rohdecke geschraubt werden.

Die dritte Ausnehmung ist vorzugsweise mit einem Innengewinde versehen. Eine Schraube kann dann durch eine Ausnehmung in der Rohdecke geführt werden und in der dritten Ausnehmung Halt finden. Auf diese Weise kann die Verbindungseinrichtung von aussen, insbesondere von einem Bereich oberhalb der Rohdecke aus, an der Rohdecke befestigt werden.

Die erste Ausnehmung kann als Vertiefung oder als Nut ausgebildet sein. Bevorzugt ist sie als Schlitz ausgeführt, der im montierten Zustand eine horizontale Ausrichtung hat. Die erste Ausnehmung bietet dann eine Auflagekante, auf der das Wandelement genügend stabilisiert wird. Gleichzeitig hilft die Auflagekante, das Wandelement horizontal auszurichten. Dies ist insbesondere dann von Bedeutung, wenn mehrere Wandelemente parallel nebeneinander angebracht werden sollen. Je genauer rechteckige Wandelemente horizontal ausgerichtet sind, desto besser passen ihre vertikalen Kanten aneinander. Die Länge des Schlitzes definiert die Grösse der Auflagekante, die Breite des Schlitzes gibt eine Führung zum Einhängen des Wandelements vor.

Die Aufgabe könnte ausserdem durch die Verwendung einer wie oben beschriebenen Verbindungseinrichtung zum Verbinden von mindestens einem Wandelement mit einer Rohdecke einer Aufzugskabine gelöst werden.

Das Einhängeelement des Wandelements ist insbesondere als Winkel ausgebildet, wobei bevorzugt ein Schenkel vertikal nach oben führt und von dessen von der Platte wegweisendem Ende ein weiterer, im Wesentlichen horizontal auszurichtender Schenkel in Richtung der abzudeckenden Rohwand weist. Der weitere Schenkel bietet eine nach unten weisende Aufhängfläche. Die Schenkel schliessen beispielweise einen Winkel von etwa 90 Grad ein. Der Schenkel kann im montierten Zustand auch leicht nach unten weisen. Die Länge des weiteren Schenkels kann so ausgebildet sein, dass bei einer gegebenen Position der Verbindungseinrichtung ein bestimmter Abstand des Wandelements zur Rohwand definiert wird, wenn zum Beispiel der weitere Schenkel im eingehängten Zustand an der Rohwand anstösst.

Das an der nach oben weisende Kante des Wandelements angeordnete Einhängeelement ist typischerweise während der Montage vom Innenraum der Aufzugskabine aus zu sehen. Bei der Montage kann das Einhängeelement mit der zugehörigen Ausnehmung in Deckung gebracht werden, wobei der Vorgang vom Monteur beobachtbar ist. Der Monteur ist also nicht darauf angewiesen, den Kontakt von Einhängeelement und der zugehörigen Ausnehmung nur zu erfühlen. Dies erleichtert die Montage.

Bevorzugt weist das Wandelement mehrere Einhängeelemente auf, so dass beim Einhängen nicht nur eine Befestigung, sondern auch eine Ausrichtung bezüglich der Horizontale und der Ebene der Rohwand erfolgt.

In einer vorteilhaften Ausführung weist das Einhängeelement eine Ausnehmung zur Aufnahme eines Befestigungselements für eine Verbindung mit einem zweiten Schenkel der Verbindungseinrichtung auf. Bevorzugt ist die Ausnehmung so angeordnet, dass sie mit einer entsprechenden zweiten Ausnehmung in der Verbindungseinrichtung fluchtet, wenn das Wandelement eingehängt ist. Der vertikale Abstand zwischen der Aufhängefläche des weiteren Schenkels und der Ausnehmung des Einhängeelements entspricht dabei zum Beispiel dem vertikalen Abstand zwischen der Auflegekante der ersten Ausnehmung und der zweiten Ausnehmung im zweiten Schenkel der Verbindungseinrichtung. Es kann beispielsweise eine Schraube durch die Ausnehmung des Einhängeelements geführt werden, die in einem Innengewinde in der zweiten Ausnehmung der Verbindungseinrichtung Halt findet. Ein Wandelement kann also zunächst durch Einhängen der Einhängeelemente positioniert werden und in einem zweiten Schritt mit einem Befestigungselement fixiert werden, wodurch die Position beibehalten wird, und das Einhängeelement beispielsweise nicht aus der ersten Ausnehmung herausrutscht oder -springt. Das Einhängeelement kann dabei auf Anschlag mit der Montagefläche der Verbindungseinrichtung gebracht werden, so dass die Position des zweiten Schenkels der Verbindungseinrichtung den Abstand des Einhängeelements und damit des Wandelements zu der Rohwand definiert.

Das Einhängeelement kann mit einer Wandplatte verbunden werden, beispielweise kann ein Winkel an eine Platte angeschraubt, angelötet oder angeschweisst werden. In einer vorteilhaften Ausführung umfasst das Wandelement eine Platte mit einem oder mehreren integrierten Einhängeelementen. Die Platte kann beispielsweise aus einem Metall gefertigt werden. Auf der dem Innenraum der Aufzugskabine zuzuwendenden Fläche der Platte kann ein Dekorbelag aufgebracht sein, zum Beispiel eine Folie oder ein Spiegel. Die Platte weist bevorzugt abgewinkelt ausgebildete Seitenränder auf.

Der Spalt zwischen benachbarten Wandelementen soll möglichst eng sein und die Spaltbreite soll über die Länge der Wandelemente möglichst gleich bleiben. Die abgewinkelten Seitenränder ermöglichen, dass benachbarte Wandelemente auf Stoss aneinander liegen können. Ausserdem ergibt sich eine definierte Schattenkante gegenüber einer benachbarten Wandplatte oder einem anderen benachbarten Wandelement, zum Beispiel einem Teil der Rohwand. Der abgewinkelte Bereich kann so ausgebildet sein, dass sich über die Länge des abgewinkelten Bereichs ein definierter Abstand von der Plattenfläche zur Rohwand ergibt. Der abgewinkelte Bereich kann damit für eine planare Ausrichtung des Wandelements bezüglich der Rohwand sorgen.

Das Wandelement kann eine Versteifungsschicht umfassen, die auf der zur Rohwand der Kabine zuzuwendenden Seite der Platte aufgebracht ist. Die Versteifungsschicht kann zur Stabilität des Wandelements beitragen, zum Lärmschutz und/oder zur Isolierung. Je nach Aufgebe kann ein geeignetes Material gewählt werden.

Zusätzlich kann das Wandelement mindestens ein Hängeprofil aufweisen, das auf der zur Rohwand der Kabine zuwendenden Seite des Wandelements angebracht ist. Mit dem Hängeprofil kann das Wandelement an einer weiteren Stelle befestigt werden, sodass es nicht frei über seine Länge von der Rohdecke herabhängt. Es können auch mehrere Hängeprofile vorgesehen sein, die zum Beispiel übereinander angeordnet sind.

Bevorzugt ist an der Rohwand zu jedem Hängeprofil ein Gegenstück derart angebracht, dass bei der Montage die anfängliche Positionierung durch die Einhängeelemente und die Verbindungseinrichtung vorgegeben ist und beim Einhängen der Einhängeelemente die Hängeprofile auch ohne Tastkontrolle an die Gegenstücke koppeln.

Das Hängeprofil kann als Haken oder Clip ausbildet sein, ist aber bevorzugt als Winkelleiste ausgebildet, die sich im Wesentlichen über die Breite des Wandelements erstreckt.

Eine Wandelementanordnung umfasst mindestens eine Verbindungseinrichtung wie oben beschrieben und mindestens ein Wandelement wie oben beschrieben.

Wandelementanordnungen können aus einem Baukastensystem auswählbar sein, welches zum Beispiel Verbindungseinrichtungen mit Schienen unterschiedlicher Länge und Wandelemente unterschiedlicher Breite und/oder Länge und/oder Wandelemente mit unterschiedlichen Dekoren umfasst, so dass zu einem vorgegebenen Rohbau eine gewünschte Wandelementanordnung erstellt werden kann. Mit einem derartigen Baukastensystem können auch bestehende Aufzugskabinen leicht mit einer neuen Innenverkleidung ausgestattet werden.

Die Wandelemente sind dabei bevorzugt innenseitig an Rohwänden angeordnet und ergeben die für den Passagier von innen sichtbare Wandverkleidung der Aufzugskabine.

Vorteilhafterweise umfasst die Aufzugskabine mindestens eine Wandunterstützung, die an einer Rohwand angebracht ist. Bei der Wandunterstützung kann es sich um Abstandhalter handeln, die eine planare Ausrichtung der Wandelemente begünstigen. Bevorzugt dient die Wandunterstützung zum Zusammenwirken mit einem Hängeprofil eines Wandelements und trägt damit zur Fixierung der Wandelemente bei. Die Wandunterstützung ist insbesondere als Clipleiste ausgebildet.

Die Wandunterstützung ist bevorzugt so angebracht, dass beim Einhängen des Wandelements in die Verbindungseinrichtung das Hängeprofil mit der Wandunterstützung zusammenwirkt, zum Beispiel eine Winkelleiste in eine Clipleiste eingeschoben wird. Dazu entsprechen sich der Abstand zwischen Rohdecke, bzw. Verbindungseinrichtung, und Wandunterstützung einerseits und der Abstand zwischen Einhängeelement und Hängeprofil andererseits. Pro Wandelement können auch mehrere Hängeprofile und Wandunterstützungen vorgesehen sein, die beispielweise übereinander angeordnet sind. Die Clipleiste besitzt vorzugsweise ein federndes Clipprofil, mit welchem das Wandelement an der Rohwand gehalten wird.

Die Aufzugskabine kann eine Deckenverkleidung aufweisen, welche die Verbindungseinrichtung überdeckt. Die Deckenverkleidung kann dazu einen abgewinkelten Randbereich umfassen, der sich im montierten Zustand nach unten erstreckt. Bevorzugt ist die Deckenverkleidung so ausgebildet, dass sie auch das Einhängeelement eines montierten Wandelements überdeckt. Die Deckenverkleidung wird typischerweise nach dem Montieren der Wandelemente angebracht. Die Wandelemente können somit unter optischer Kontrolle montiert werden, ohne dass im endmontierten Zustand eine optische Beeinträchtigung vorliegt, weil die Verbindungseinrichtung und die Einhängeelemente noch nicht überdeckt sind.

Die Aufgabe wird ausserdem gelöst durch ein Verfahren zum Verbinden von mindestens einem Wandelement mit einem Rohbau einer Aufzugskabine, umfassend die folgenden Schritte. Zunächst erfolgt ein Anbringen mindestens einer wie oben beschriebenen Verbindungseinrichtung an die Rohdecke einer Aufzugskabine. Danach wird mindestens ein wie oben beschriebenes Wandelement befestigt, insbesondere durch Einhängen von mindestens einem Einhängeelement an die Verbindungseinrichtung.

Die Verbindungseinrichtung umfasst dabei mindestens ein Schienenelement mit zwei Schenkeln, von denen ein erster Schenkel an die Rohdecke angelegt wird. Ein zweiter Schenkel weist mindestens eine Montagefläche für mindestens ein Wandelement auf.

Die Montagefläche umfasst mindestens eine erste Ausnehmung zum Einhängen des Wandelements. Alternativ weist die Montagefläche mindestens ein Einhängeelement auf.

Das Wandelement weist an seiner im montierten Zustand nach oben weisenden Kante mindestens ein Einhängeelement zum Eingriff in die erste Ausnehmung der Verbindungseinrichtung auf. Das Einhängeelement ist insbesondere als Winkel ausgebildet. Alternativ umfasst das Wandelement an seiner im montierten Zustand nach oben weisenden Kante mindestens eine erste Ausnehmung.

Das Befestigen mindestens eines Wandelements erfolgt, indem das Einhängeelement des Wandelements in die erste Ausnehmung der Verbindungseinrichtung eingehängt wird oder die erste Ausnehmung des Wandelements auf das Einhängeelement der Verbindungseinrichtung aufgehängt wird.

Gleichzeitig mit dem Einhängen können ein oder mehrere Hängeprofile der Wandelemente mit einem oder mehreren Wandunterstützungen auf der Rohwand in Wirkverbindung gebracht werden, beispielweise eingehängt werden.

Zusätzlich können an der nach unten weisenden Kante des Wandelements angebrachte Befestigungselemente mit an der Rohwand oder an dem Rohboden der Aufzugskabine angebrachten Gegenstücken verbunden werden. Anschliessend kann eine Deckenverkleidung angebracht werden.

Die Erfindung ist im Folgenden in Ausführungsbeispielen anhand von Zeichnungen näher erläutert. Entsprechende Elemente sind mit übereinstimmenden Bezugszeichen versehen. Es zeigen
- Figur 1: eine perspektivische Ansicht einer Verbindungseinrichtung und eines Wandelements;
- Figur 2: eine perspektivische Ansicht einer Wandelementanordnung von einer Rohwand aus gesehen;
- Figur 3: eine perspektivische Ansicht einer Wandelementanordnung vom Innenraum der Aufzugskabine aus gesehen;
- Figur 4: eine Detailansicht zweier Wandelementanordnungen in Schnitt- und Draufsicht;
- Figur 5a: eine perspektivische Ansicht einer Rohdecke mit Verbindungseinrichtung vom Innenraum der Aufzugskabine aus gesehen;
- Figur 5b: eine weitere perspektivische Ansicht einer Rohdecke mit Verbindungseinrichtung vom Innenraum der Aufzugskabine aus gesehen;
- Figur 6: eine schematische Darstellung eines Wandelements mit einem Hängeprofil und einer Wandunterstützung;
- Figur 7a: eine perspektivische Ansicht zweier Rohwände mit Wandunterstützungen vom Innenraum der Aufzugskabine aus gesehen;
- Figur 7b: eine weitere perspektivische Ansicht einer Rohwand mit Wandunterstützungen vom Innenraum der Aufzugskabine aus gesehen;
- Figur 8: eine schematische Ansicht eines Innenraums einer Aufzugskabine;
- Figur 9: eine perspektivische Ansicht von Wandelementanordnungen.

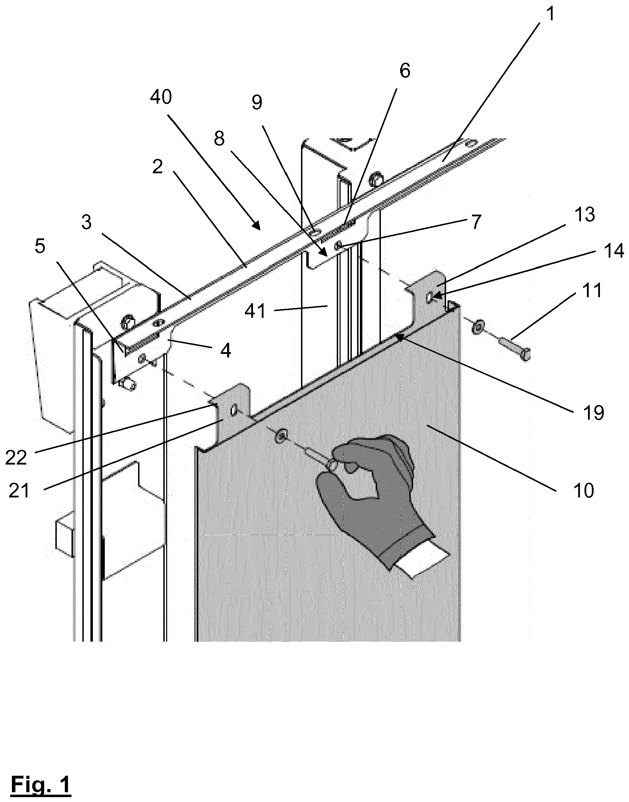

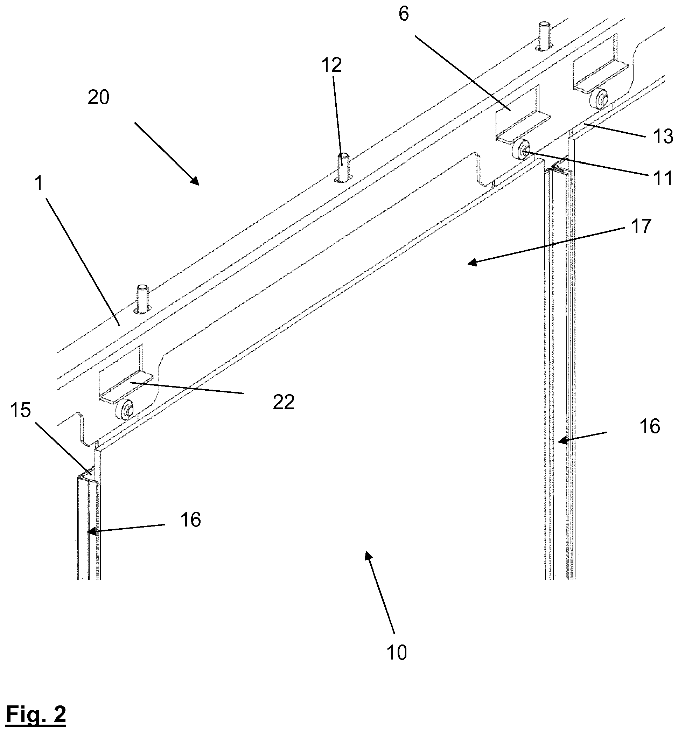

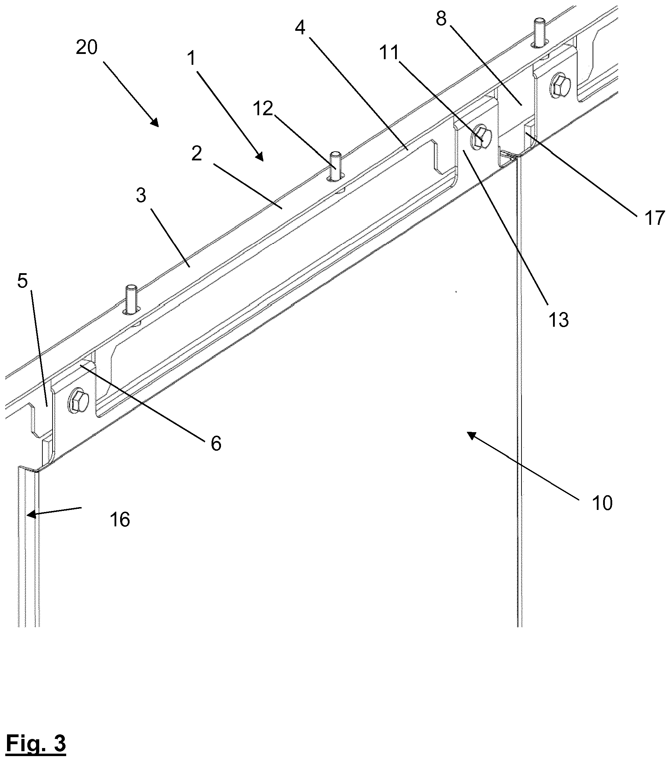

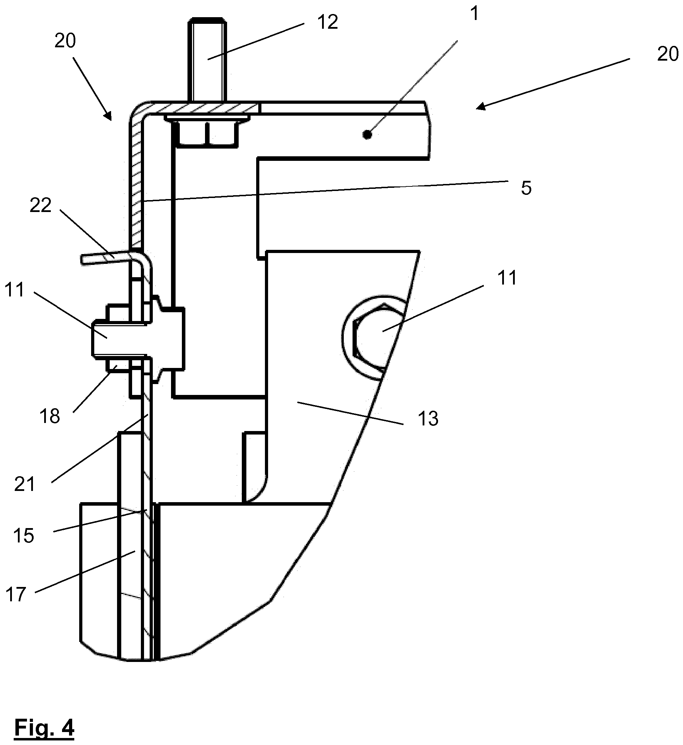

Figur 1 zeigt eine perspektivische Ansicht einer Verbindungseinrichtung 1 und eines Wandelements 10, bevor das Wandelement 10 eingehängt ist. Figuren 2 und 3 zeigen perspektivische Ansichten einer Wandelementanordnung 20 mit Verbindungseinrichtung 1 und eingehängtem Wandelement 10. Figur 4 zeigt eine Detailansicht zweier Wandelementanordnungen 20 in Schnitt- und Draufsicht.

Das Wandelement 10 bedeckt im montierten Zustand die Rohwand 40 einer Aufzugskabine, die zum Beispiel aus einer Rahmenkonstruktion 41 gebildet ist. Die Verbindungseinrichtung 1 umfasst ein Schienenelement 2 mit einem ersten Schenkel 3 und einem zweiten Schenkel 4. Der zweite Schenkel 4 besitzt zum Beispiel Laschen 8, die als Montageflächen 5 für ein Wandelement 10 ausgebildet sind.

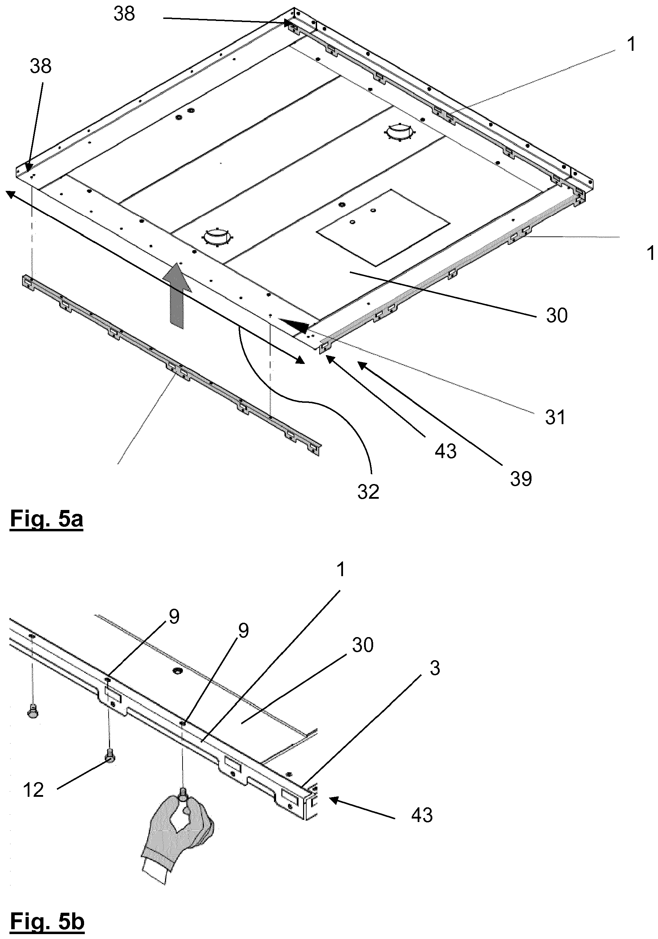

Die Montagefläche 5 weist erste Ausnehmungen 6 zum Einhängen eines Wandelements 10 auf und zweite Ausnehmungen 7 zur Aufnahme eines Befestigungselements 11 für eine Verbindung mit dem Wandelement 10. Die zweiten Ausnehmungen 7 sind beispielsweise mit einem Innengewinde 18 versehen. Der erste Schenkel 3 umfasst dritte Ausnehmungen 9 für eine Aufnahme von einem Befestigungselement 12 zum Verbinden mit der Rohdecke. Der erste Schenkel 3 weist bevorzugt von der Rohwand 40 weg, so dass die Verbindungseinrichtung 1 vom Innenraum der Aufzugskabine aus montiert werden kann (siehe auch Figuren 5a, 5b).

Das Wandelement 10 besitzt an seiner im montierten Zustand nach oben weisenden Kante 19 Einhängeelemente 13, zum Eingriff in die erste Ausnehmung 6 der Verbindungseinrichtung 1. Ein Einhängeelement 13 umfasst vorzugsweise einen vertikalen Schenkel 21, von dem aus sich in Richtung der Rohwand 40 ein horizontaler Schenkel 22 wegstreckt. Die horizontalen Schenkel 22 können bei der Montage des Wandelements 10 einfach in die ersten Ausnehmungen 6 geschoben werden, bis sie an der Montagefläche 5 anschlagen, wobei das Wandelement 10 positioniert und ausgerichtet wird.

Das Einhängeelement 13 weist bevorzugt ausserdem Ausnehmungen 14 zur Aufnahme eines Befestigungselements 11, hier eine Schraube, auf, mit welchem das Wandelement 10 an die Verbindungseinrichtung 1 angeschraubt werden kann. Die Befestigungselemente 11 werden durch die Ausnehmungen 14 im Einhängeelement und durch die Ausnehmungen 7 in dem zweiten Schenkel 4 der Verbindungseinrichtung 1 geführt, wobei sie Halt in den Innengewinden 18 finden.

Die Wandelemente 10 können eine Platte 15 mit integriertem Einhängeelement 13 umfassen. Die Platten 15 besitzen bevorzugt abgewinkelt ausgebildete Seitenränder 16, die zu der Rohwand 40 weisen. Die abgewinkelten Seitenränder 16 benachbarter Platten 15 liegen im montierten Zustand in etwa aneinander an. Die Wandelemente 10 können eine Versteifungsschicht 17 umfassen, die auf der zur Rohwand 40 der Kabine zuzuwendenden Seite der Platte 15 aufgebracht ist.

Figur 5a zeigt eine perspektivische Ansicht einer Rohdecke 30 mit Verbindungseinrichtung 1 vom Innenraum der Aufzugskabine aus gesehen und Figur 5b eine Detailansicht davon. Die Verbindungseinrichtung 1 wird von unten an die Rohdecke 30 herangebracht, bis der erste Schenkel 3 an der Rohdecke 30 anliegt. In der Rohdecke 30 sind zum Beispiel Gewindebohrungen 31 vorgesehen, die mit den Ausnehmungen 9 im ersten Schenkel 3 fluchten. Die Verbindungseinrichtung 1 kann dann von dem Innenraum der Aufzugskabine aus mit Befestigungselementen 12, hier Schrauben, an die Rohdecke 30 geschraubt werden. Für jede der drei Rohwände 40, die keine Aufzugstür aufweisen, ist insbesondere je eine Verbindungseinrichtung 1 vorgesehen, die sich über die Breite 32 der Rohwand 40, bwz. Rohdecke 30, erstreckt und jeweils mehrere Wandelemente 10 aufnehmen kann.

Die Verbindungseinrichtungen 1 erstrecken sich bis in die Ecken 38 der Rohdecke 30. An einem Ende 39 besitzen die Verbindungseinrichtungen 1 insbesondere Ausnehmungen 43, in welchen im montierten Zustand der erste Schenkel 3 der anschliessenden Verbindungseinrichtung 1 Platz findet.

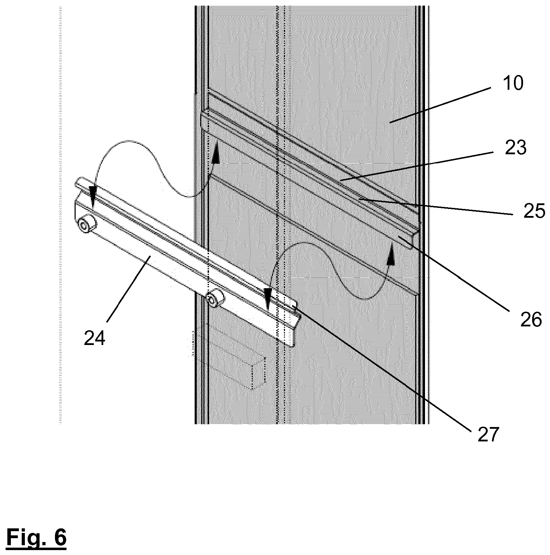

Figur 6 zeigt eine schematische Darstellung eines Beispiels für ein Wandelement 10 mit einem Hängeprofil 23 und einer Wandunterstützung 24. Die Wandelemente 10 weisen Hängeprofile 23 auf, die auf der zu einer Rohwand 40 einer Aufzugskabine zuwendenden Seite der Wandelemente 10 angebracht sind. Die Hängeprofile 23 sind als Winkelleiste ausgebildet mit einer horizontalen Schenkelleiste 25 und einer vertikalen Schenkelleiste 26.

Bei der Montage schiebt sich die vertikale Schenkelleiste 26 hinter das Clipprofil 27 einer auf der Rohwand 40 angebrachten Wandunterstützung 24. Schliesslich bleibt die horizontale Schenkelleiste 25 auf dem Clipprofil 27 liegen. Die Wandelemente 10 hängen somit an den Verbindungseinrichtungen 1 und an den Wandunterstützungen 24.

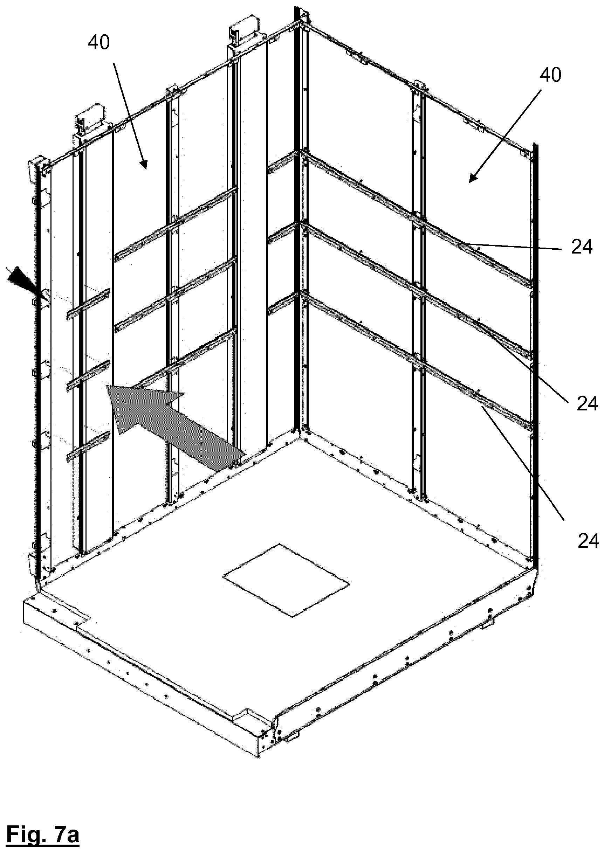

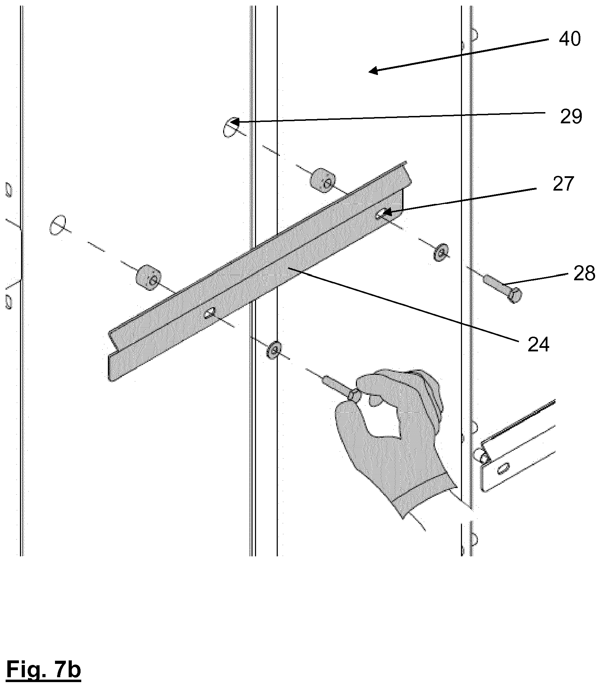

Figur 7a zeigt eine perspektivische Ansicht von Beispielen zweier Rohwände 40 mit Wandunterstützungen 24, hier Clipleisten, vom Innenraum der Aufzugskabine ausgesehen. Figur 7b zeigt ein Detail davon. Die Wandunterstützungen 24, hier Clipleisten, weisen Ausnehmungen 27 zur Aufnahme von Schrauben 28 auf. Die Ausnehmungen 27 korrespondieren mit Ausnehmungen 29, die in den Rohwänden 40 vorgesehen sind und ein Innengewinde aufweisen. Mit den Schrauben 28 können die Wandunterstützungen 24, hier Clipleisten, also von dem Innenraum der Aufzugskabine an den Rohwänden 40 festgeschraubt werden.

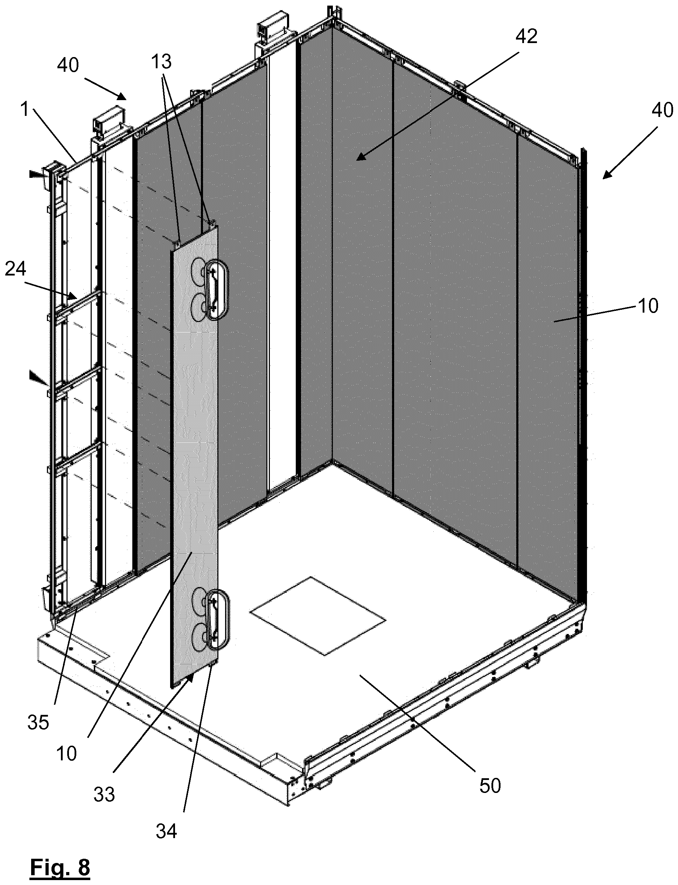

Figur 8 zeigt eine schematische Ansicht eines Beispiels für einen Innenraum 42 einer hier mit 100 bezeichneten Aufzugskabine. Gezeigt sind zwei Rohwände 40 und ein Rohboden 50. Die Rohwände 40 sind mit Wandelementen 10 bedeckt. Die Wandelemente 10 werden von dem Innenraum der Aufzugskabine 100 an die Rohwände 40 herangebracht, mit Einhängeelementen 13 in eine Verbindungseinrichtung 1 und mit Hängeprofilen 23 auf Wandunterstützungen 24 gehängt.

Die Wandelemente 10 können an ihrer zum Rohboden 50 weisenden unteren Kante 33 Befestigungslaschen 34 aufweisen, mit denen sie an einer am Rohboden 50 vorgesehenen Befestigungsleiste 35 fixierbar sind. Die Befestigungslaschen 34 können nicht explizit gezeigte Ausnehmungen und die Befestigunsleiste 35 kann nicht explizit gezeigte Ausnehmungen mit Innengewinde aufweisen, so dass die Wandelemente 10 auch an der unteren Kante 33 festgeschraubt werden können.

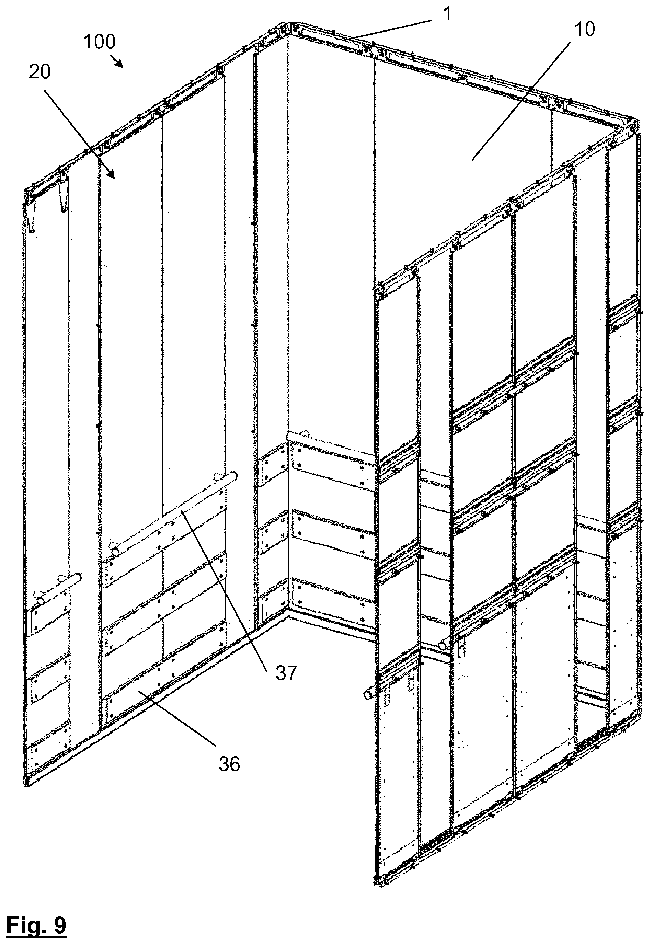

Figur 9 zeigt eine perspektivische Ansicht von Beispielen von Wandelementanordnungen 20. Die Wandelementanordnungen 20 umfassen Verbindungseinrichtungen 1 und Wandelemente 10. Auf den montierten Wandelementen 10 können noch Schutzleisten 36 und Handläufe 37 befestigt werden.

## Patentansprüche

1. Aufzugskabine mit einer Rohdecke (30), mindestens einem Wandelement (10) und mit mindestens einer Verbindungseinrichtung zur Verbindung von dem Wandelement (10) mit der Rohdecke (30), wobei die Verbindungseinrichtung (1) mindestens ein Schienenelement (2) mit zwei Schenkeln (3, 4) umfasst, von denen ein erster Schenkel (3) im montierten Zustand an der Rohdecke (30) anliegt und ein zweiter Schenkel (4) mindestens eine Montagefläche (5) für mindestens ein Wandelement (10) aufweist, wobei die Montagefläche (5) mindestens eine erste Ausnehmung (6) zum Einhängen des Wandelements (10) umfasst, wobei das Wandelement (10) an seiner im montierten Zustand nach oben weisenden Kante (19) mindestens ein Einhängeelement (13) zum Eingriff in die erste Ausnehmung (6) der Verbindungseinrichtung (1) aufweist, das insbesondere als Winkel ausgebildet ist,
oder
wobei das Wandelement (10) an seiner im montierten Zustand nach oben weisenden Kante (19) mindestens eine erste Ausnehmung (6) umfasst und die Montagefläche (5) mindestens ein Einhängeelement (13) zum Eingriff in die erste Ausnehmung (6) des Wandelements (10) aufweist.

2. Aufzugskabine nach Anspruch 1, wobei die Aufzugskabine mindestens ein Befestigungselement (11) umfasst, und wobei die Montagefläche (5) mindestens eine zweite Ausnehmung (7) zur Aufnahme des Befestigungselements (11) für eine Verbindung mit dem Wandelement (10) umfasst, wobei die zweite Ausnehmung (7) bevorzugt mit einem Innengewinde versehen ist.

3. Aufzugskabine nach Anspruch 1 oder 2, wobei der zweite Schenkel (4) Laschen (8) umfasst, die als Montageflächen (5) ausgebildet sind.

4. Aufzugskabine nach einem der vorhergehenden Ansprüche, wobei die Aufzugskabine mindestens ein Befestigungselement (12) umfasst, und wobei der erste Schenkel (3) mindestens eine dritte Ausnehmung (9) für eine Aufnahme von dem Befestigungselement (12) zum Verbinden mit der Rohdecke umfasst, wobei die dritte Ausnehmung (9) bevorzugt mit einem Innengewinde versehen ist.

5. Aufzugskabine nach einem der vorhergehenden Ansprüche 2 bis 4, wobei die erste Ausnehmung (6) als Schlitz ausgeführt ist, der im montierten Zustand eine horizontale Ausrichtung hat.

6. Aufzugskabine nach einem der vorhergehenden Ansprüche, wobei die Aufzugskabine mindestens ein Befestigungselement (11) umfasst, wobei das Einhängeelement (13) eine Ausnehmung (14) zur Aufnahme des Befestigungselements (11) für eine Verbindung mit einem zweiten Schenkel (4) der Verbindungseinrichtung (1) aufweist.

7. Aufzugskabine nach einem der vorhergehenden Ansprüche, wobei das Wandelement (10) eine Platte (15) mit integriertem Einhängeelement (13) umfasst, bevorzugt mit abgewinkelt ausgebildeten Seitenrändern (16).

8. Aufzugskabine nach einem der vorhergehenden Ansprüche, wobei die Aufzugskabine mindestens eine Rohwand (40) umfasst, wobei das Wandelement (10) eine Versteifungsschicht (17) umfasst, die auf der zu der Rohwand (40) einer Aufzugskabine zuzuwendenden Seite der Platte (15) aufgebracht ist.

9. Aufzugskabine nach einem der vorhergehenden Ansprüche, wobei die Aufzugskabine mindestens eine Rohwand (40) umfasst, wobei das Wandelement mindestens ein Hängeprofil (23) aufweist, das auf der zu der Rohwand (40) einer Aufzugskabine zuwendenden Seite des Wandelements (10) angebracht ist.

10. Aufzugskabine nach einem der vorhergehenden Ansprüche, wobei die Aufzugskabine mindestens eine Rohwand (40) und eine Wandunterstützung (24), bevorzugt eine Clipleiste, umfasst, die an der Rohwand (40) angebracht ist, insbesondere zum Zusammenwirken mit einem Hängeprofil (23) eines Wandelements (10).

11. Aufzugskabine nach einem der vorhergehenden Ansprüche, wobei die Aufzugskabine eine Deckenverkleidung aufweist, welche die Verbindungseinrichtung (1) überdeckt.

12. Verfahren zum Verbinden von mindestens einem Wandelement mit einem Rohbau einer Aufzugskabine umfassend die Schritte:
- Anbringen mindestens einer Verbindungseinrichtung (1) an die Rohdecke (30) einer Aufzugskabine, wobei die Verbindungseinrichtung (1) mindestens ein Schienenelement (2) mit zwei Schenkeln (3, 4) umfasst, von denen ein erster Schenkel (3) an die Rohdecke (30) angelegt wird und ein zweiter Schenkel (4) mindestens eine Montagefläche (5) für mindestens ein Wandelement (10) aufweist, wobei die Montagefläche (5) mindestens eine erste Ausnehmung (6) zum Einhängen des Wandelements (10) umfasst oder mindestens ein Einhängeelement aufweist;
- Befestigen mindestens eines Wandelements (10), wobei das Wandelement (10), das an seiner im montierten Zustand nach oben weisenden Kante (19) mindestens ein Einhängeelement (13), zum Eingriff in die erste Ausnehmung (6) der Verbindungseinrichtung (1) aufweist, welches insbesondere als Winkel ausgebildet ist, oder mindestens eine erste Ausnehmung umfasst, wobei das Einhängeelement (13) des Wandelements (10) in die erste Ausnehmung (6) der Verbindungseinrichtung (1) eingehängt wird oder die erste Ausnehmung des Wandelements (10) auf das Einhängeelement der Verbindungseinrichtung (1) aufgehängt wird.

## Claims

1. Elevator car comprising a raw ceiling (30), at least one wall element (10) and at least one connecting device for connecting the wall element (10) to the raw ceiling (30), wherein the connecting device (1) comprises at least one rail element (2) having two legs (3, 4), of which a first leg (3) rests against the raw ceiling (30) in the mounted state and a second leg (4) has at least one mounting surface (5) for at least one wall element (10), wherein the mounting surface (5) comprises at least one first recess (6) for suspending the wall element (10), wherein the wall element (10) has, on the edge (19) thereof pointing upwards in the mounted state, at least one suspension element (13) for engaging in the first recess (6) of the connecting device (1), which suspension element is designed in particular as a bracket, or wherein the wall element (10) comprises, on the edge (19) thereof pointing upwards in the mounted state, at least one first recess (6) and the mounting surface (5) has at least one suspension element (13) for engaging in the first recess (6) of the wall element (10).

2. Elevator car according to claim 1, wherein the elevator car comprises at least one fastening element (11), and wherein the mounting surface (5) comprises at least one second recess (7) for receiving the fastening element (11) for connection to the wall element (10), wherein the second recess (7) is preferably provided with an internal thread.

3. Elevator car according to either claim 1 or claim 2, wherein the second leg (4) comprises tabs (8) which are designed as mounting surfaces (5).

4. Elevator car according to any of the preceding claims, wherein the elevator car comprises at least one fastening element (12), and wherein the first leg (3) comprises at least one third recess (9) for receiving the fastening element (12) for connection to the raw ceiling, wherein the third recess (9) is preferably provided with an internal thread.

5. Elevator car according to any of the preceding claims 2 to 4, wherein the first recess (6) is designed as a slot which has a horizontal orientation in the mounted state.

6. Elevator car according to any of the preceding claims, wherein the elevator car comprises at least one fastening element (11), wherein the suspension element (13) has a recess (14) for receiving the fastening element (11) for connection to a second leg (4) of the connecting device (1).

7. Elevator car according to any of the preceding claims, wherein the wall element (10) comprises a plate (15) having an integrated suspension element (13), preferably having angled side edges (16).

8. Elevator car according to any of the preceding claims, wherein the elevator car comprises at least one raw wall (40), wherein the wall element (10) comprises a stiffening layer (17) which is applied to the side of the plate (15) facing the raw wall (40) of an elevator car.

9. Elevator car according to any of the preceding claims, wherein the elevator car comprises at least one raw wall (40), wherein the wall element has at least one suspension profile (23) which is attached to the side of the wall element (10) facing the raw wall (40) of an elevator car.

10. Elevator car according to any of the preceding claims, wherein the elevator car comprises at least one raw wall (40) and a wall support (24), preferably a clip strip, which is attached to the raw wall (40), in particular for interaction with a suspension profile (23) of a wall element (10).

11. Elevator car according to any of the preceding claims, wherein the elevator car has a ceiling lining which covers the connecting device (1).

12. Method for connecting at least one wall element to a shell of an elevator car, comprising the steps of:
- attaching at least one connecting device (1) to the raw ceiling (30) of an elevator car, wherein the connecting device (1) comprises at least one rail element (2) having two legs (3, 4), of which a first leg (3) rests against the raw ceiling (30) and a second leg (4) has at least one mounting surface (5) for at least one wall element (10), wherein the mounting surface (5) comprises at least one first recess (6) for suspending the wall element (10) or has at least one suspension element;
- fastening at least one wall element (10), wherein the wall element (10) which has, on the edge (19) thereof pointing upwards in the mounted state, at least one suspension element (13) for engaging in the first recess (6) of the connecting device (1), which suspension element is designed in particular as a bracket, or comprises at least one first recess, wherein the suspension element (13) of the wall element (10) is suspended in the first recess (6) of the connecting device (1) or the first recess of the wall element (10) is suspended on the suspension element of the connecting device (1).

## Revendications

1. Cabine d'ascenseur comportant un plafond brut (30), au moins un élément de paroi (10) et comportant au moins un dispositif de fixation permettant de fixer de l'élément de paroi (10) au plafond brut (30), le dispositif de fixation (1) comprenant au moins un élément rail (2) comportant deux branches (3, 4), dont une première branche (3) repose à l'état monté contre le plafond brut (30) et dont une seconde branche (4) présente au moins une surface de montage (5) destinée à au moins un élément de paroi (10), la surface de montage (5) comprenant au moins un premier évidement (6) permettant d'accrocher l'élément de paroi (10), l'élément de paroi (10) présentant, sur son rebord (19) orienté vers le haut à l'état monté, au moins un élément d'accrochage (13) permettant l'insertion dans le premier évidement (6) du dispositif de fixation (1), l'élément d'accrochage étant en particulier conçu sous la forme d'un angle,
ou
l'élément de paroi (10) comprenant, sur son rebord (19) orienté vers le haut à l'état monté, au moins un premier évidement (6) et la surface de montage (5) présentant au moins un élément d'accrochage (13) permettant l'insertion dans le premier évidement (6) de l'élément de paroi (10).

2. Cabine d'ascenseur selon la revendication 1, dans laquelle la cabine d'ascenseur comprend au moins un élément de maintien (11), et la surface de montage (5) comprenant au moins un deuxième évidement (7) permettant de recevoir l'élément de maintien (11) pour une fixation à l'élément de paroi (10), le deuxième évidement (7) étant de préférence pourvu d'un filetage intérieur.

3. Cabine d'ascenseur selon la revendication 1 ou 2, dans laquelle la seconde branche (4) comprend des languettes (8) conçues comme des surfaces de montage (5).

4. Cabine d'ascenseur selon l'une des revendications précédentes, dans laquelle la cabine d'ascenseur comprend au moins un élément de maintien (12), et la première branche (3) comprenant au moins un troisième évidement (9) pour recevoir l'élément de maintien (12) permettant la fixation au plafond brut, le troisième évidement (9) étant de préférence pourvu d'un filetage intérieur.

5. Cabine d'ascenseur selon l'une des revendications 2 à 4 précédentes, dans laquelle le premier évidement (6) est réalisé sous la forme d'une fente qui, à l'état monté, présente un positionnement horizontal.

6. Cabine d'ascenseur selon l'une des revendications précédentes, dans laquelle la cabine d'ascenseur comprend au moins un élément de maintien (11), l'élément d'accrochage (13) présentant un évidement (14) permettant de recevoir l'élément de maintien (11) pour une fixation à une seconde branche (4) du dispositif de fixation (1).

7. Cabine d'ascenseur selon l'une des revendications précédentes, dans laquelle l'élément de paroi (10) comprend une plaque (15) comportant un élément d'accrochage intégré (13), comportant de préférence des bords latéraux angulaires (16).

8. Cabine d'ascenseur selon l'une des revendications précédentes, dans laquelle la cabine d'ascenseur comprend au moins une paroi brute (40), l'élément de paroi (10) comprenant une couche de renforcement (17) installée du côté de la plaque (15) faisant face à la paroi brute (40) d'une cabine d'ascenseur.

9. Cabine d'ascenseur selon l'une des revendications précédentes, dans laquelle la cabine d'ascenseur comprend au moins une paroi brute (40), l'élément de paroi présentant au moins un profil de suspension (23) installé sur le côté de l'élément de paroi (10) faisant face à la paroi brute (40) d'une cabine d'ascenseur.

10. Cabine d'ascenseur selon l'une des revendications précédentes, dans laquelle la cabine d'ascenseur comprend au moins une paroi brute (40) et un support de paroi (24), de préférence une bande de clip, lequel support de paroi est installé à la paroi brute (40), permettant en particulier de coopérer avec un profil de suspension (23) d'un élément de paroi (10).

11. Cabine d'ascenseur selon l'une des revendications précédentes, dans laquelle la cabine d'ascenseur présente un revêtement de plafond qui recouvre le dispositif de fixation (1).

12. Procédé de fixation d'au moins un élément de paroi à un gros œuvre d'une cabine d'ascenseur, comprenant les étapes :
- d'installation d'au moins un dispositif de fixation (1) au plafond brut (30) d'une cabine d'ascenseur, le dispositif de fixation (1) comprenant au moins un élément rail (2) comportant deux branches (3, 4), dont une première branche (3) est appliquée au plafond brut (30) et une seconde branche (4) présente au moins une surface de montage (5) destinée à au moins un élément de paroi (10), la surface de montage (5) comprenant au moins un premier évidement (6) permettant d'accrocher l'élément de paroi (10) ou au moins un élément d'accrochage ;
- de maintien d'au moins un élément de paroi (10), l'élément de paroi (10) présentant, sur son rebord (19) orienté vers le haut à l'état monté, au moins un élément d'accrochage (13) permettant l'insertion dans le premier évidement (6) du dispositif de fixation (1), qui est conçu en particulier sous la forme d'un angle, ou comprenant au moins un premier évidement, l'élément d'accrochage (13) de l'élément de paroi (10) étant accroché dans le premier évidement (6) du dispositif de fixation (1) ou le premier évidement de l'élément de paroi (10) étant suspendu à l'élément d'accrochage du dispositif de fixation (1).
